# EUROPEAN PATENT SPECIFICATION

(11) **EP 1 706 240 B1**
(45) Date of publication and mention of the grant of the patent: **23.05.2007**
(21) Application number: 05705605.3
(22) Date of filing: 12.01.2005
(51) Int. Cl.: B25B 27/00, B60J 10/00

(54) **ATTACHING DEVICE FOR GUTTER-SECTIONAL STRIP**
BEFESTIGUNGSVORRICHTUNG FÜR EINE RINNEN-PROFILLEISTE
DISPOSITIF DE FIXATION POUR BANDE EN U

(30) Priority: 21.01.2004 JP 2004013163
(43) Date of publication of application: 04.10.2006
(73) Proprietor: 3M Innovative Properties Company, Saint Paul, MN 55133-3437 (US)
(72) Inventor: FUJINO, Takayoshi, Sagamihara, Kanagawa 229-1185 (JP)
(74) Representative: Voortmans, Gilbert J.L.
(86) International application number: PCT/US2005/001025
(87) International publication number: WO 2005/072914

(56) References cited:
- US-A- 4 172 313
- US-A- 5 735 032
- PATENT ABSTRACTS OF JAPAN vol. 2000, no. 23, 10 February 2001 (2001-02-10) & JP 2001 171570 A (KANSAI PAINT CO LTD), 26 June 2001 (2001-06-26)
- PATENT ABSTRACTS OF JAPAN vol. 2003, no. 12, 5 December 2003 (2003-12-05) & JP 2003 285970 A (KOKOKU KIKO KK), 7 October 2003 (2003-10-07)

## Description

### Field of the Invention

The present invention relates to an attaching device for gradually attaching a gutter-sectional strip to an edge of a plate-like portion of an object and a method of using such a device.

### Background of the Invention

A gutter-sectional (U-shaped) strip having a pair of arm pieces opposed to each other and a back length connecting the arm pieces to each other has been known as a linear member to be attached to an exposed edge of a plate-like portion in various objects such as a building, a vehicle, a general machine, a furniture, a stationery or others for the purpose of the protection, ornamentation or maintenance. Also, as described, for example, in Japanese Unexamined Patent Publication (Kokai) No. 2003-170537, a gutter-sectional strip attached to a bonded portion of metallic plates as a seal member has also been known. The gutter-sectional strip is adapted so that the edge of the plate-like portion of the object is securely received in a recess defined the arm pieces and the back length by friction or adhesion. Particularly, the gutter-sectional strip molded with plastics or rubber to have a required softness has been widely adopted in the uses in which it is required to conform with the curved edge of the plate-like portion.

In the prior art, the operation for attaching the gutter-sectional strip of such a kind to the edge of the plate-like portion of the object has been manually carried out. In general, according to this operation, it is necessary to gradually fit the strip onto the edge of the plate-like portion while slightly widening a gap between the pair of arm pieces in the unused closed state. This action causes a time required for the attaching operation to significantly increase as the gutter-sectional strip becomes longer. Particularly, when the long-sized gutter-sectional strip is attached in conformity with the curved edge of the plate-like portion, a skilled worker is required.

In the method for attaching the gutter-sectional strip to the edge of the plate-like portion of the object by the manual operation as described above, not only the operation time becomes longer, but also the load applied to the operator tends to increase because care must be taken not to injure a hand during the operation since there may be a sharp portion such as a bun in the edge of the plated portion. Further, since the operation is carried out in a groping or blind state when the edge of the plate-like portion is at a position difficult to be visible in an ordinary working pose, additional skill is required for accurately and promptly attaching the gutter-sectional strip.

### Summary of the Invention

The present invention is directed to a tool for gradually fitting or attaching a gutter-sectional strip onto an edge of a plate-like portion of an object.

Attachment jigs, such as that described in Japanese Unexamined Patent Publication (Kokai) No. 2001-97636 have been used to gradually and continuously adher, for example, an adhesive tape onto a deformed surface of an object. Unlike the present invention, however, such conventional attachment jigs have no structure for gradually fitting a gutter-sectional strip onto an edge of a plate-like portion of an object. Jigs for applying gutter-sectional strips according to the preamble of claim 1 are known from US Patent Publications US4172313 and US 5735032. However, such jigs are unable to widen a gap between the pair of arm pieces of the gutter-sectional strip.

It is desirable for the present inventive device to be capable of promptly and safely attaching the gutter-sectional strip to the edge of the plate-like portion while causing the strip to accurately conform with the edge of the plate-like portion. It is also desirable for the device of the present invention to attach the gutter-sectional strip without the need for a skilled worker. In addition, it is desirable for the present device to be able to attach the gutter-sectional strip to an edge of the plate-like portion that is curved. It is further desirable for the present device to be used at a position difficult to be visible in an ordinary working pose. While the above traits are considered desirable for the present inventive device, it is not intended that the present invention necessarily exhibit each of these traits.

In accordance with one aspect of the present invention, an attaching device is provided for gradually attaching a gutter-sectional strip having an optional length to an edge of a plate-like portion of an object, the gutter-sectional strip including a pair of arm pieces opposing each other and a back length connecting the arm pieces with each other. The device comprises a body having a passage for the gutter-sectional strip; a pressing groove , provided in the body, for receiving the gutter-sectional strip with the back length thereof being firstly received; a support surface provided in the body and substantially opposing and cooperating with the pressing groove to hold therebetween the object having the plate-like portion; and a strip guide provided in the passage for guiding the gutter-sectional strip toward the pressing groove while spreading out the arm pieces of the gutter-sectional strip as the gutter-sectional strip is fed along the passage. The pressing groove and the support surface can be structured so that the object and the gutter-sectional strip can roll by therebetween, slide by therebetween, or both.

For example, in one embodiment of the present invention, the device can further comprise at least one fitting roller provided in the body to be rotatable about an axis extending substantially perpendicular to a feeding direction of the gutter-sectional strip along the passage, with the pressing groove being defined by a portion of one or more fitting rollers. For example, the pressing groove can extend annularly along an outer circumferential surface of the one or more fitting rollers. Thus, the strip guide may guide the gutter-sectional strip toward the one or more fitting rollers while spreading out the arm pieces of the gutter-sectional strip as the gutter-sectional strip is fed along the passage.

In the above or other embodiments, the present device can also further comprise at least one support roller provided so as to be rotatable in the body, with at least part or all of the support surface being defined by an outer circumferential surface of the at least one support roller. Thus, the outer circumferential surface of one or more support rollers may substantially oppose and cooperate with the pressing groove to hold therebetween the object having the plate-like portion.. In addition, the outer circumferential surface of one or more support rollers may substantially oppose the outer circumferential surface of one or more fitting rollers and cooperate with one or more fitting rollers to hold therebetween the object having the plate-like portion.

Instead of using one or more fitting rollers, the pressing groove may be stationary (i.e., non-rotatable) and have a relatively low coefficient of friction surface that can slide along the gutter-section strip. In addition or in the alternative, instead of using one or more support rollers, the support surface may be stationary (i.e., non-rotatable) and have a relatively low coefficient of friction that can slide along the object.

The fitting roller may further include a centering channel formed in the pressing groove, for receiving the edge of the plate-like portion of the object. The fitting roller(s) and/or the support roller(s) may be movable toward and away from the fitting roller(s).

The attaching device of the present invention may further comprise an edge guide provided in the body and disposed upstream of the fitting roller and the support roller as seen in a direction of relative motion of the plate-like portion during a strip attaching operation, the edge guide including an engaging portion engageable with the edge of the plate-like portion for guiding the body along the edge of the plate-like portion during the strip attaching operation. The edge guide may include a guide roller provided to be rotatable in the body.

The pressing groove may be movable toward and away from the support surface and/or the support surface may be movable toward and away from the pressing groove. In addition, fitting roller(s) may be movable toward and away from the support roller(s) and/or the support roller(s) may be movable toward and away from the fitting roller(s). The attaching device of the present invention may further comprise a biasing member for elastically biasing the pressing groove and the support surface toward each other. In addition, the attaching device may further comprise a biasing member for ela-stically biasing the fitting roller(s) and the support roller(s) toward each other. The pressing groove and/or the support surface may be relatively pivotable to change their relatively angular positional relationship. In addition, the fitting roller(s) and/or the support roller(s) may be relatively pivotable to change a relative angular positional relationship between respective rotary axes.

When the gutter-sectional strip is attached to the edge of the plate-like portion of the object, according to the present invention, the strip guide can be made so as to automatically open the pair of arm pieces of the gutter-sectional strip in the passage, and the pressing groove (e.g., of the fitting roller(s)) can be made so as to push the gutter-sectional strip onto the edge of the plate-like portion to gradually fit them with each other while maintaining this state. Accordingly, in comparison with the operation in which the operator directly attaches the gutter-sectional strip onto the edge of the plate-like portion by hand, the safety of the attaching operation can be significantly improved and the time required for the operation can be shortened to a great extent. In addition, with the object having the plate-like portion sequentially nipped between the pressing groove (e.g., of the fitting roller(s)) and the support surface (e.g., of the support roller(s)) during the attaching operation, it is possible to move the body in conformity with the edge of the plate-like portion in a stable state without the necessity of a skilled operator, even if the edge of the plate-like portion extends in a curved manner or is difficult to see in an ordinary working pose. Thus, with the present invention, the gutter-sectional strip can be accurately attached to the edge of the plate-like portion.

With the present inventive attaching device mounted to the object at an attachment-starting position and the edge of the plate-like portion initially fit into the pressing groove (e.g., a centering channel of the fitting roller(s)), the body and the pressing groove (e.g., of the fitting roller(s)) can be accurately and promptly located at a proper position along the edge of the plate-like portion. In this way, the gutter-sectional strip can thereafter be more smoothly attached to the edge of the plate-like portion, during the strip-attachment stage.

With the body of the present attaching device being guided by an edge guide along the edge of the plate-like portion, during the strip attaching operation, it can be easier to move the body in the extending direction of the edge without the necessity of a skilled operator, even if the edge of the plate-like portion is variously curved. In this way, the gutter-sectional strip can be promptly and safely attached to the edge of the plate-like portion and accurately in conformity therewith.

An attaching device according to the present invention can be made to reduce, or even avoid, the risk that the moving smoothness of the attaching device is impeded by the edge guide.

With the present invention, the operation of mounting the attaching device onto the object at the attachment-starting position can become easier, when the pressing groove (e.g., of the fitting roller(s)) and the support surface (e.g., of the support roller(s)) are able to selectively move in mutually approaching and departing directions.

In accordance with the present invention, the object having the plate-like portion can be nipped further in a more stable state between the pressing groove (e.g., of the fitting roller(s)) and the support surface (e.g., of the support roller(s)) under the elastic bias of a biasing member, even when the size of the plate-like portion varies. In addition, when the pressure is applied in a stable state to the gutter-sectional strip during the attaching operation from the pressing groove (e.g., of the fitting roller(s)) to the edge of the plate-like portion, the attachment accuracy can be further facilitated, irrespective of the degree of operator skill.

In accordance with the present invention, the support surface (e.g., of the support roller(s)) can be made to passively move to properly change the relative angular positional relationship between the support surface and the pressing groove (e.g., the rotary axis of the support roller(s) and that of the fitting roller(s)), even when the bending angle of the edge of the plate-like portion variously changes during the strip-attaching operation, provided the operator unintentionally move the body. As a result, the body of the attaching device can be moved in a stable state while conforming the pressing groove (e.g., of the fitting roller(s)) to the plate-like portion having the variously curved edge, without the necessity of a skilled operator, and the gutter-sectional strip can be accurately and promptly attached.

### Brief Description of the Drawings

Fig. 1 is a front view of one embodiment of the inventive attaching device.
Fig. 2 is a side view of the attaching device shown in Fig. 1.
Fig. 3 is a sectional view of the attaching device taken along a line III-III in Fig. 2 in which a plate-like portion of an object to be treated is also illustrated.
Fig. 4 is a side view illustrating one constituent element of the attaching device shown in Fig. 1.
Fig. 5 is a sectional view of the constituent element shown in Fig. 4 taken along a line V-V.
Fig. 6 is a sectional view of the constituent element shown in Fig. 4 taken along a line VI-VI.
Figs. 7a and 7b are a perspective view of a gutter-sectional strip and the strip on a plate-like portion, respectively, illustrated as one example to which the attaching device shown in Fig. 1 is suitably applicable.
Figs. 8a and 8b are illustrations for explaining the strip attaching operation using the attaching device shown in Fig. 1. Fig. 8a shows the attaching device located at the attachment-starting position and Fig. 8b shows the gutter-sectional strip located at the preparing position.
Fig. 9 is the illustration for explaining the strip attaching operation using the attaching device shown in Fig. 1, illustrating the attaching device in the gradual attaching stage.
Fig. 10 is a front view of another embodiment of the inventive attaching device.
Fig. 11 is a side view of the attaching device shown in Fig. 10.
Fig. 12 is a sectional view of the attaching device shown in Fig. 11 during the strip attaching operation taken along a line XII-XII, together with a plate-like portion of an object and a gutter-sectional strip.
Fig. 13 is the illustration corresponding to Fig. 12, showing the strip attaching operation to the plate-like portion having a different shape.
Figs. 14a to 14f are illustrations of modified strip guides in the attaching devices shown in Figs. 1 and 10. Figs. 14a and 14b are a plan view and a side view of a deformed rib structure, Figs. 14c and 14d are a plan view and a side view of a rotating roller structure, and Figs. 14e and 14f are a plan view and a side view of the combination of ribs and pins.

### Detailed Description of the Invention

Exemplary embodiments of the present invention will be described in detail below with reference to the attached drawings, wherein common reference numerals are used for denoting constituent elements corresponding to each other throughout all the drawings. It is understood that the following embodiments are not the only embodiments according to the present invention.

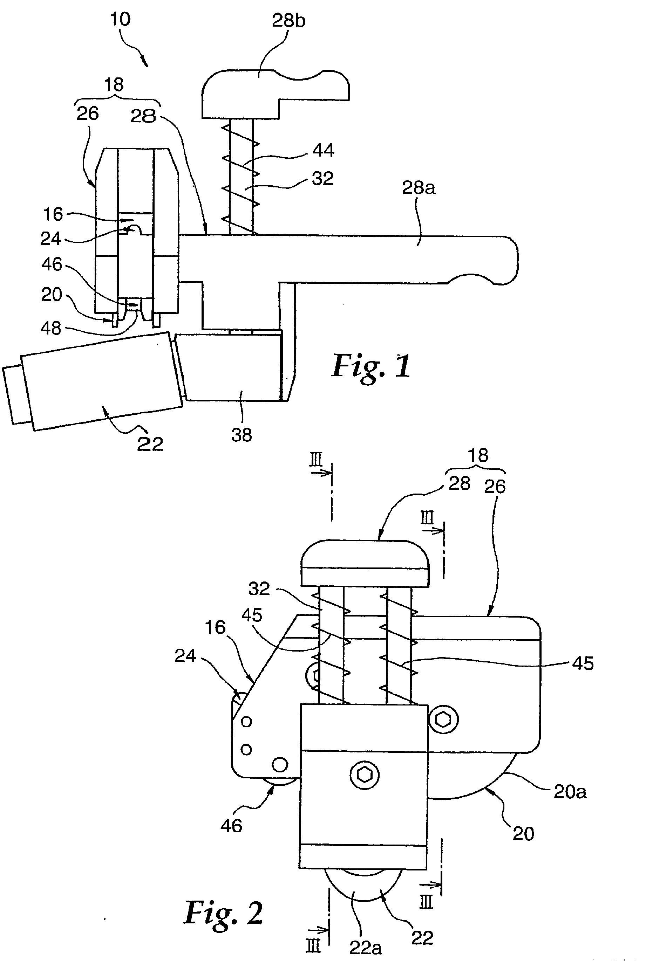

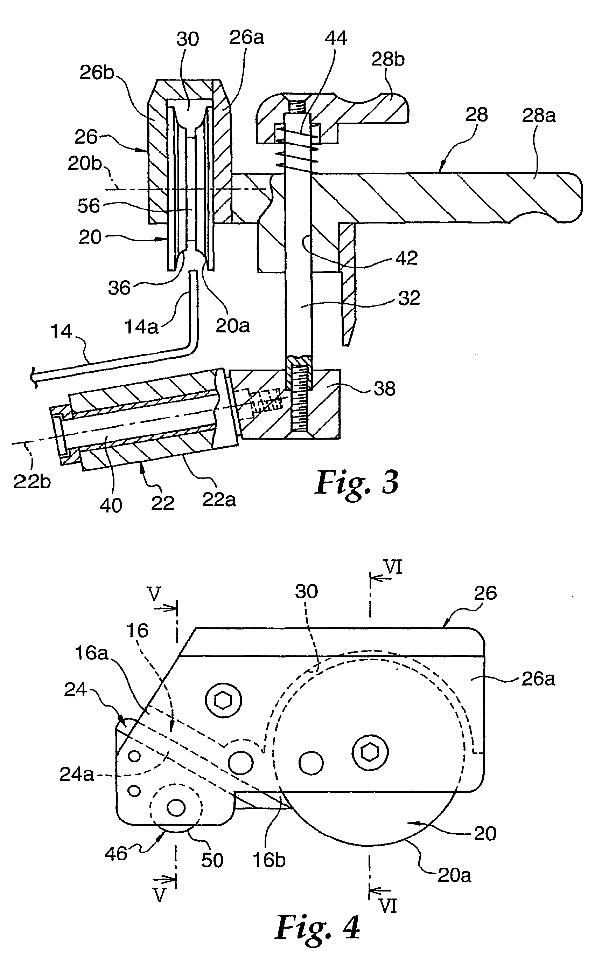

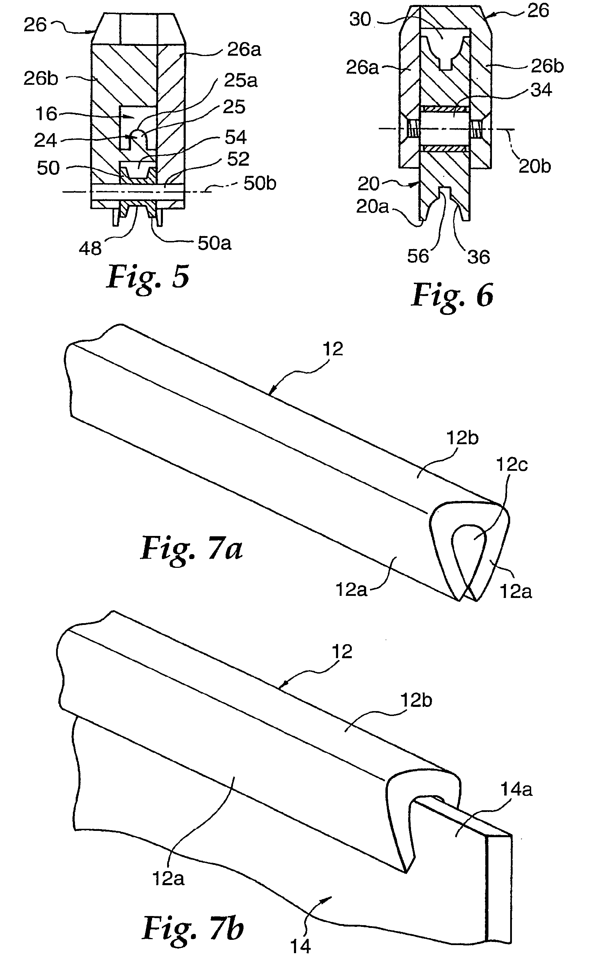

With reference to the attached drawings, Figs. 1 to 3 illustrate an attaching device 10 for gradually attaching a gutter-sectional strip onto an edge of a plate-like portion of an object, showing a front view, a side view and a sectional view, respectively; Figs. 4 to 6 illustrate a portion of a structure of the attaching device 10, showing a side view, a sectional view and another sectional view, respectively; and Fig. 7 illustrates a gutter-sectional strip 12 and a plate-like portion 14 as one example to which the attaching device 10 is suitably applicable.

As shown in Figs. 1 to 3, the attaching device 10 includes a body 18 having a passage 16 of a gutter-sectional strip 12 (Fig. 7), a fitting roller 20 provided in the body 18 to be rotatable at a position in the vicinity of the passage 16, a support roller 22 provided in the body 18 to be rotatable at a position in the vicinity of the fitting roller 20, and a strip guide 24 provided in the passage 16 for guiding the gutter-sectional strip 12 toward the fitting roller 20 while maintaining a predetermined pose. The body 18 includes a first part 26 having the passage 16 and carrying the fitting roller 20 and a second part 28 extending outward from the first part 26 and carrying the support roller 22.

As shown in Figs. 4 to 6, the first part 26 of the body 18 includes a pair of side walls 26a, 26b fixedly combined with each other, between which side walls are defined the passage 16 having an inlet 16a and an outlet 16b for the gutter-sectional strip 12 and a vacant space 30 adjacent to the outlet 16b of the passage 16 for accommodating the fitting roller 20 for rotation. The second part 28 of the body 18 includes a stationary handle 28a extending outward generally in the vertical direction from the one side wall 26a and a movable handle 28b movable parallel to the stationary handle 28a via a pair of slide shafts 32 (Fig. 1). These stationary handle 28a and the movable handle 28b, respectively, have such a shape and a size that the operator could grip both the handles by one hand and operate them.

The gutter-sectional strip 12 to which the attaching device 10 is applicable is a linear member of an optional length having a pair of arm pieces 12a opposed to each other and a back length 12b for connecting these arm pieces 12a with each other (Fig. 7(a)). These arm pieces 12a and the back length 12b continuously extend over an entire length of the gutter-sectional strip 12, and adapted to securely receive an edge 14a of a plate-like portion 14 of an object in a recess 12c defined between the arm pieces 12a and the back length 12b by friction or adhesion (Fig. 7(b)). The gutter-sectional strip 12 is molded with plastics or rubber as an integral body and has a required softness capable of being attached to the curved edge 14a of the plate-like portion 14 in conformity therewith. The gutter-sectional strip 12 of this kind is attached to the edge 14a of the exposed plate-like portion 14 in various objects such as a building, a vehicle, a general machine, a furniture or a stationery for the purpose of protection, ornamentation or maintenance. Also, in accordance with materials of the gutter-sectional strip 12, it may function as a seal member by being attached to the edge 14a of the metallic plate-like portion consisting of a coupling area between metallic plates.

The passage 16 formed in the first part 26 of the body 18 has a cross-section slightly larger than that of the gutter-sectional strip 12 and straightly extends from the inlet 16a to outlet 16b (Fig. 4). The gutter-sectional strip 12 introduced into the passage 16 from the inlet 16a is straightly advanced within the passage 16 so that the back length 12b gradually approaches an outer circumferential surface 20a of the fitting roller 20. On the other hand, the strip guide 24 provided in the passage 16 is shaped as a straightly extending rib 25 (Fig. 5) having an outer circumferential surface 25a bulged in the passage 16, and as accompanied with the feeding motion of the gutter-sectional strip 12 along the passage 16, guides the gutter-sectional strip 12 toward the fitting roller 20 while widening a gap between the pair of arm pieces 12a of the gutter-sectional strip 12.

The fitting roller 20 has a rotary axis 20b (Fig. 3) extending generally in the vertical direction to the feeding direction of the gutter-sectional strip 12 along the passage 16, and while being mounted for rotation on a shaft 34 (Fig. 6) bridged between the side walls 26a and 26b of the first part 26 of the body so that part of the outer circumferential surface 20a (an area having a center angle of approximately 120 degrees in Fig. 4) is exposed out of the first part 26, is accommodated within the vacant space 30. The fitting roller 20 is brought into contact with the back length 12b of the gutter-sectional strip 12 delivered from the outlet 16b of the passage 16 with the outer circumferential surface 20a thereof, and thus passively made to rotate as the gutter-sectional strip 12 is being fed. On the outer circumferential surface 20a of the fitting roller 20, there is provided an annular pressing groove 36 (Fig. 3) of a U-shaped cross-section for receiving the back length 12b of the gutter-sectional strip 12, extending continuously in the peripheral direction throughout the outer circumferential surface 20a.

The support roller 22 has a support surface (e.g., the cylindrical outer circumferential surface 22a) substantially opposed via a gap to an area of the outer circumferential surface 20a of the fitting roller 20 exposed out of the first part 26 and a rotary axis 22b extending in the direction slightly inclined to the rotary axis 20b of the fitting roller 20 (Fig. 3). The movable handle 28b in the second part 28 of the body is fixed to a roller pedestal 38 via the pair of slide shafts 32, and the support roller 22 is mounted for rotation on a shaft 40 projected from the roller pedestal 38. The support roller 22 nips the object having the plate-like portion 14 between the outer circumferential surfaces 22b and 20b in association with the fitting roller 20, and is made to passively rotate in this state as the gutter-sectional strip 12 is being fed.

In this regard, the body 18 and the fitting roller 20 is preferably made of hard material such as plastics or metal as a whole in view of attaching the gutter-sectional strip 12 accurately in conformity with the edge 14a of the plate-like portion 14. Also, the support roller 22 is preferably manufactured such that a core thereof is formed of hard material such as plastics or metal and a portion containing the outer circumferential surface 22a is formed of soft material such as rubber in view of preventing the object having the plate-like portion 14 from being damaged.

Each of the pair of slide shafts 32 provided in the second part 28 of the body 18 is fixed to the movable handle 28b at one end and to the roller pedestal 38 at the other end to be straightly disposed parallel to the other (Figs. 2 and 3). These slide shafts 32 are received in a pair of through-holes 42, respectively, formed in the stationary handle 28a (Fig. 3) to be slidingly movable in the axial direction, whereby it is possible to move the movable handle 28b and the support roller 22 parallel to the stationary handle 28a and the fitting roller 20, respectively. That is, the fitting roller 20 and the support roller 22 are movable in the mutually approaching direction and the mutually distant direction without changing the relative angular positional relationship between the rotary axes 20b and 22b thereof.

In the second part 28 of the body 18, a biasing member 44 is provided for elastically biasing the stationary handle 28a and the movable handle 28b in the mutually distant direction (Fig. 1). In the illustrated embodiment, the biasing member 44 is a pair of compressive coil springs 45 mounted to encircle the pair of slide shafts 32, respectively (Fig. 2). These compressive coil springs 45 are interposed between the stationary handle 28a and the movable handle 28b in the compressible state to elastically bias the support roller 22 toward the fitting roller 20 so that the support roller 22 is elastically held at an initial position closest to the outer circumferential surface 22a of the support roller 22 (Fig. 1). It may also be desirable for the body 18 to also include another biasing member elastically biasing the handles 28a and 28b (i.e., the rollers 20 and 22) apart to assist an operator, if desirable, in attaching the device 10.

When the operator pushes the movable handle 28b toward the stationary handle 28a against the elastic force of the pair of compressive coil springs 45, it is possible to properly widen a gap between the fitting roller 20 and the support roller 22 (Fig. 3). Also, when the pressure to the movable handle 28b is released, it is possible to nip the plate-like portion 14 of the object between the fitting roller 20 and the support roller 22 due to the elastic force of the pair of compressive coil springs 45. In this regard, the biasing member 44 may be of a known structure other than the compressive coil spring 45.

The attaching device 10 in the illustrated embodiment is further provided with an edge guide 46 in the body 18 at a position upstream from the fitting roller 20 and the support roller 22 as seen in the relatively moving direction of the plate-like portion 14 during the strip attaching operation described later (Fig. 2). The edge guide 46 has an engaging portion or surface 48 engageable with the edge 14a of the plate-like portion 14 (Fig. 1), and operates to guide the body 18 along the edge 14a of the plate-like portion 14 during the strip attaching operation. Such an edge guide 46 can be provided by forming the groove-like engaging portion 48 at a predetermined position in the first part 26 of the body 18.

In the illustrated embodiment, the edge guide 46 is constituted by a guide roller 50 provided for rotation in the first part 26 of the body 18. The guide roller 50 has the annular groove-like engaging portion 48 continuously extending along an outer circumferential surface 50a thereof and is mounted for rotation to a shaft 52 bridged between the side walls 26a and 26b of the first part 26 of the body, wherein a rotary axis 50b thereof is disposed generally parallel to the rotary axis 20b of the fitting roller 20 (Fig. 5). The guide roller 50 is accommodated for rotation in a second vacant space 54 defined within the first part 26 while exposing part of the outer circumferential surface 50a (an area covered with a center angle of approximately 100 degrees in Fig. 4) out of the first part 26.

Further, in the illustrated embodiment, the fitting roller 20 has, in the pressing groove 36 formed on the outer circumferential surface 20a thereof, an annular centering channel 56 of a generally rectangular cross-section continuously extending in the peripheral direction generally along a center line of a U-shaped bottom of the pressing groove 36 (Fig. 3). The centering channel 56 of the fitting roller 20 operates to temporarily receive the edge 14a of the plate-like portion 14 of the object to be treated prior to the attachment of the gutter-sectional strip during the strip attaching operation by the attaching device described later.

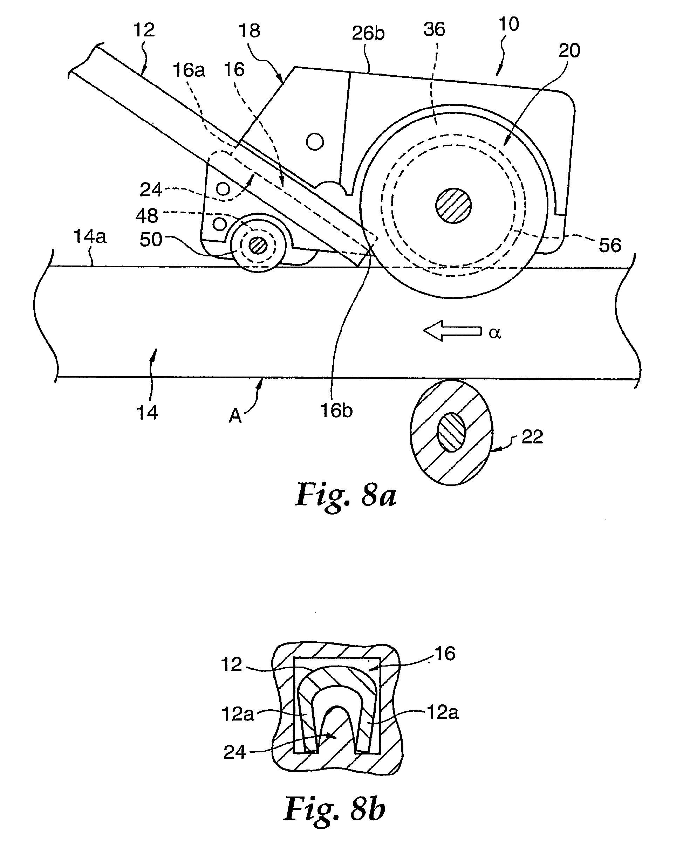

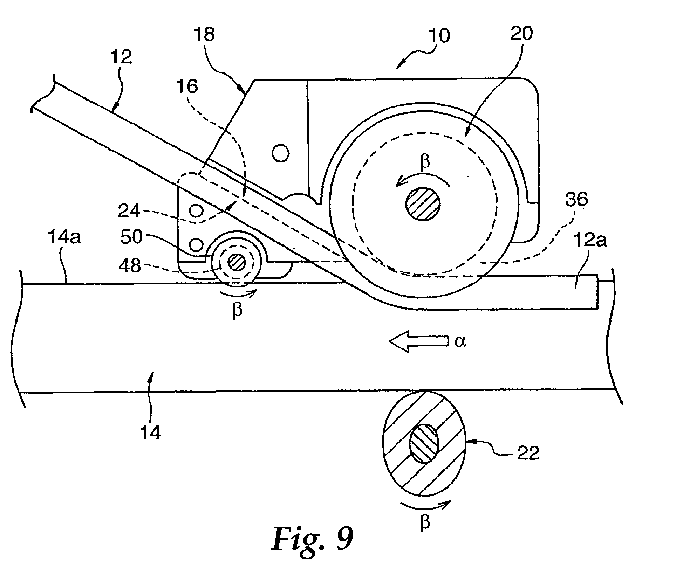

Next, with reference to Figs. 8 and 9, the strip attaching operation using the attaching device 10 of the above structure will be described. In this regard, in Figs. 8 and 9, to assist the understanding of the operation, the internal structure of the attaching device 10 is shown in the exposed state by disassembling the first part 26 in the body 18 of the attaching device 10.

Initially, as a preparation stage, a front end of the gutter-sectional strip 12 is gradually introduced into the inlet 16a of the passage 16 provided in the body 18 of the attaching device 10 while pushingly widening a gap between the arm pieces 12a by inserting the strip guide 24 into the recess 12c of the gutter-sectional strip 12. When the front end of the gutter-sectional strip 12 has reached a position in the vicinity of the outlet 16b of the passage, the gutter-sectional strip 12 is temporarily held relative to the body 18 (Fig. 8(a)). At this preparing position, the predetermined front end length of the gutter-sectional strip 12 is maintained in a state wherein the gap between the arm pieces 12a are pushingly widened (Fig. 8(b)).

The operator operates the movable handle 28b on the stationary handle 28a in the second part 28 of the body as describe before to sufficiently separate the support roller 22 from the fitting roller 20, and in this state, inserts the object A having the plate-like portion 14 between the fitting roller 20 and the support roller 22. Thereafter, the movable handle 28b is released to nip the object A between the fitting roller 20 and the support roller 22 due to the elastic force of the pair of compressive coil springs 45. At this time, since the gutter-sectional strip 12 is not yet substantially received in the pressing groove 36 of the fitting roller 20 and not interposed between the fitting roller 20 and the edge 14a of the plate-like portion 14, the edge 14a of the plate-like portion 14 can be accommodated within the centering channel 56 of the fitting roller 20 with no substantial looseness (Fig. 8(a)). Simultaneously therewith, the edge 14a of the plate-like portion 14 is received in the engaging portion 48 of the guide roller 50 forming the edge guide 46. In such a manner, the attaching device 10 is maintained on the plate-like portion 14 at an attachment-starting position in a self-supporting manner.

The operator grips the body 18 (for example, the handle 28a) of the attaching device 10 and continuously moves the body 18 along the edge 14a of the plate-like portion 14 in the direction shown by an arrow α wherein the guide roller 50 is a preceding side and the fitting roller 20 is a succeeding side. Along therewith, the gutter-sectional strip 12 located at the preparing position in the passage 16 is continuously withdrawn from the outlet 16b, for example, due to the friction with the edge 14a of the plate-like portion 14 and gradually received into the pressing groove 36 of the fitting roller 20 while overlapping the back length 12b with the centering channel 56. At this time, since the edge 14a of the plate-like portion 14 fit into the centering channel 56 of the fitting roller 20 at the above-mentioned attachment-starting position (Fig. 8(a) is located at the axial-directional center of the pressing groove 36, the edge 14a of the plate-like portion 14 is smoothly inserted into the recess 12c between the arm pieces 12a widened by the strip guide 24, of the gutter-sectional strip 12 received thereafter in the pressing groove 36. Such an inserting stage of the plate-like portion 14 to the gutter-sectional strip 12 can be constituted to be carried out before the arm pieces 12a of the gutter-like strip 12 delivered from the passage 16 recovers to the original closed form by properly adjusting the relative positional relationship between the fitting roller 20 and the strip guide 24 in advance.

In the above-mentioned inserting stage, when the edge 14a of the plate-like portion 14 is once inserted into the recess 12c from the front end of the gutter-sectional strip 12, the gutter-sectional strip 12 is continuously withdrawn through the passage 16 and gradually and automatically attached to the edge 14a of the plate-like portion 14 by the operation of the operator for sequentially moving the body 18 in the direction shown by an arrow α (Fig. 9). During this gradual attachment stage, the object A having the plate-like portion 14 is sequentially nipped between the fitting roller 20 and the support roller 22 in a stable state. While, since the gutter-sectional strip 12, especially the back length 12b thereof, is applied with a proper pressure toward the edge 14a of the plate-like portion 14 from the pressing groove 36 of the fitting roller 20 rotating in the direction shown by an arrow β, it is attached to the edge 14a so that the edge 14a of the plate-like portion 14 is deeply and securely inserted into the recess 12c between the arm pieces 12a. Such a pressure may be intentionally applied by the operator during the manipulation of the body 18, but may be more stably imparted to the plate-like portion 14 due to the elasticity of the biasing member 44 (compressive coil springs 45) between the fitting roller 20 and the support roller 22 simultaneously rotating in the direction shown by an arrow β.

In the above-mentioned attachment stage, the guide roller 50 located on the preceding side of the attaching device 10 engages by the engaging portion 48 with the edge 14a of the plate-like portion 14 and automatically guides the body 18; i.e., the fitting roller 20 on the succeeding side; along the extending direction of the edge 14a while rotating in the direction shown by an arrow β. Accordingly, the operator can accurately attach the gutter-sectional strip 12 to the edge 14a only by moving the body 18 in the direction shown by an arrow α without taking care in which direction the edge 14a of the plate-like portion 14 extends. According to the above-mentioned operation of the guide roller 50, it is possible to smoothly and automatically move the body 18 and the fitting roller 20 in the extending direction of the edge 14a in conformity therewith even if the edge 14a of the plate-like portion 14 extends in a curved manner. Thus, by using the attaching device 10, it is possible to accurately and promptly attach the predetermined length of the gutter-sectional strip 12 onto the edge 14a of the plate-like portion 14.

As described above, according to the attaching device 10, when the gutter-sectional strip 12 is attached to the edge 14a of the plate-like portion 14 of the object, the strip guide 24 automatically widens the gap between the pair of arm pieces 12a of the gutter-sectional strip 12 originally closed in a non-used state within the passage 16, and while maintaining this state, the fitting roller 20 operates to press the gutter-sectional strip 12 onto the edge 14a of the plate-like portion 14 and gradually fit them to each other. Accordingly, in comparison with the attaching operation in which the operator manually attaches the gutter-sectional strip 12 directly to the edge 14a of the plate-like portion 14, the safety of the operation is significantly improved and the time required for the operation is extremely shortened. Furthermore, since the object A having the plate-like portion 14 is always nipped between the fitting roller 20 and the support roller 22 during the attaching operation, it is possible to move the body 18 without any skill by conforming the fitting roller 20 with the edge 14a and accurately attach the gutter-sectional strip 12 to the edge 14a of the plate-like portion 14, even if the edge 14a of the plate-like portion 14 extends in a curved manner and/or is difficult to be visual in an ordinary pose.

In addition, since the attaching device 10 is adapted so that the fitting roller 20 and the support roller 22 are movable to be closer to and away from each other, there is an advantage in that the operation for mounting the attaching device 10 to the object at the attachment-starting position becomes easy and the dimensional range of the object A to which the attaching device 10 is applicable becomes larger. Also, since the biasing member 44 is provided for elastically biasing the fitting roller 20 and the support roller 22 in the mutually approaching direction, it is possible to nip the object A having the plate-like portion 14 between the fitting roller 20 and the support roller 22 in a more stable state even if the dimension of the object A changes. Furthermore, since the pressure toward the edge 14a of the plate-like portion 14 is stably applicable during the attaching operation from the pressing groove 36 of the fitting roller 20 irrespective of the operator's skill, it is possible to further facilitate the attachment accuracy.

According to the attaching device 10, since the centering channel 56 is provided in the pressing groove 36 of the fitting roller 20 for receiving the edge 14a of the plate-like portion 14 in the object, it is possible to accurately and promptly located the body 18 and the fitting roller 20 at a proper position relative to the edge 14a of the plate-like portion 14 when the attaching device 10 is mounted to the object A at the attachment-starting position, and further to more smoothly attach the gutter-sectional strip 12 to the edge 14a. Also, since the edge guide 46 is provided for guiding the body 18 along the edge 14a of the plate-like portion 14 during the strip attaching operation, it is possible to easily move the body 18 and the fitting roller 20 in the extending direction of the edge 14a even if the edge 14a of the plate-like portion 14 is variously curved, and thus to promptly and safely attaching the gutter-sectional strip 12 to the edge 14a while accurately conforming the former with the latter. The edge guide 46 formed of the guide roller 50 is capable of eliminating a risk for damaging the smoothness of the motion of the attaching device 10. In addition, if the shaft 52 is adapted to be pivotable on the first part 26 of the body, it may be possible to change the pose of the edge guide in a slanted manner in accordance with the degrees of curvature of the edge 14a of the plate-like portion 14.

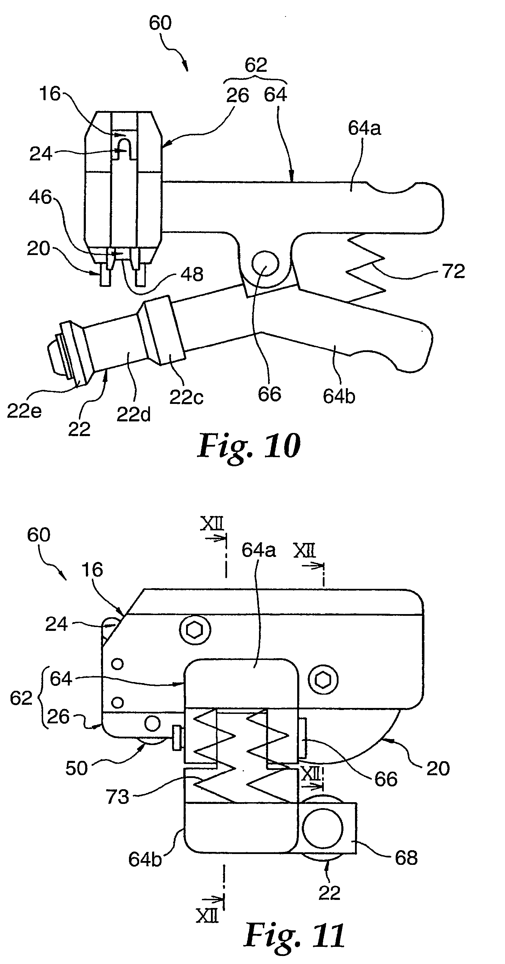

Figs. 10 to 13 illustrate the inventive attaching device 60 according to another embodiment of the present invention. While the fitting roller 20 and the support roller 22 are movable parallel to each other in the attaching device 10 of the preceding embodiment, according to the attaching device 60, a fitting roller 20 and a support roller 22 are adapted to be pivotable in the mutually approaching/departing directions so that the relative angular positional relationship between rotary axes 20b and 22b varies. Since a remaining structure of the attaching device 60 other than that described above is substantially the same as that of the attaching device 10, the explanation thereof will be eliminated except that the corresponding constituent elements are denoted by common reference numerals.

A body 62 of the attaching device 60 includes a first part 26 having a passage 16 and carrying the fitting roller 20 and a second part 64 extending outward from the first part 26 and carrying the support roller 22. The second part 64 of the body 62 includes a stationary handle 64a generally straightly extending outward from one side wall 26 of the first part 26 and a movable handle 64b rotatable relative to the stationary handle 64a via a pivot pin 66. These stationary handle 64a and the movable handle 64b have such a shape and a size that the operator could grip both the handles by one hand and operate them.

The movable handle 64b in the second part 64 of the body 62 is fixedly coupled to a roller pedestal 68 at one end which is a point of action relative to the pivot pin 66 used as a middle fulcrum, and the support roller 22 is carried for rotation by a shaft 70 projected from the roller pedestal 68. Thereby, an outer circumferential surface 22a of the support roller 22 is opposed at a gap to an exposed area of an outer circumferential surface 20a of the fitting roller 20, wherein a rotary axis 22b thereof is inclined relative to that 20b of the fitting roller 20 so that the relative angular positional relationship between them is properly variable. In this regard, according to this embodiment, the fitting roller 20 has no centering channel 56 described before and the support roller 22 is the combination of three rollers 22c to 22e having different diameters, respectively.

A biasing member 72 is provided in the second part 64 of the body 62 for elastically biasing the fitting roller 20 and the support roller 22 in the mutually approaching direction. In the illustrated embodiment, the biasing member 72 is formed of a pair of compressive coil springs 73 interposed between the other ends of the stationary handle 64a and the movable handle 64b which are the points of action (Fig. 11). These compressive coil springs 73 are interposed between the stationary handle 64a and the movable handle 64b in the compressible state to elastically bias the support roller 22 toward the fitting roller 20 so that the outer circumferential surface 22a of the support roller 22 is maintained at the initial position closest to the outer circumferential surface 20a of the fitting roller 20 (Fig. 10).

The strip attaching operation carried out by using the attaching device 60 of the above-mentioned structure will be described below. In this regard, according to this attachment operation, the gutter-sectional strip 12 shown in Fig. 7 is gradually attached to the edge 14a of the plate-like portion 14 formed of the bonded part of metallic plates.

The operator operates the attaching device 60 temporarily holding the gutter-sectional strip 12 at the preparing position explained before regarding the attaching device 10 to rotate the movable handle 64b in the second part 64 of the body relative to the stationary handle 64a, so that the support roller 22 is sufficiently away from the fitting roller 20. In this state, the object A having the plate-like portion 14 is inserted between the fitting roller 20 and the support roller 22. Then, the movable handle 64b is released to nip the object A between the fitting roller 20 and the support roller 22 due to the elastic force of the pair of compressive coil springs 73. Since the gutter-sectional strip 12 is not yet substantially received in the pressing groove 36 of the fitting roller 20 at this time, the edge 14a of the plate-like portion 14 is substantially positioned generally to the axial-directional center of the pressing groove 36 of the fitting roller 20. Simultaneously therewith, the edge 14a of the plate-like portion 14 is accommodated in the engaging portion 48 of the guide roller 50 forming the edge guide 46 to hold the attaching device 60 at the attachment-starting position on the plate-like portion 14 in a self-supporting manner.

From this attachment-starting position, the operator grips the body 62 of the attaching device 60 (for example, the stationary handle 64a) and continuously moves the body 62 along the edge 14a of the plate-like portion 14 in the direction in which the guide roller 50 is on the preceding side and the fitting roller 20 is the succeeding side. In association therewith, the gutter-sectional strip 12 located at the preparing position is continuously withdrawn from the outlet 16b, for example, due to the friction with the edge 14a of the plate-like portion 14 and gradually received in the pressing groove 36 of the fitting roller 20. The edge 14a of the plate-like portion 14 is smoothly inserted into the recess 12c between the arm pieces 12a of the gutter-sectional strip 12 accommodated in the pressing groove 36 of the fitting roller 20, which space is pushingly widened by the strip guide 24.

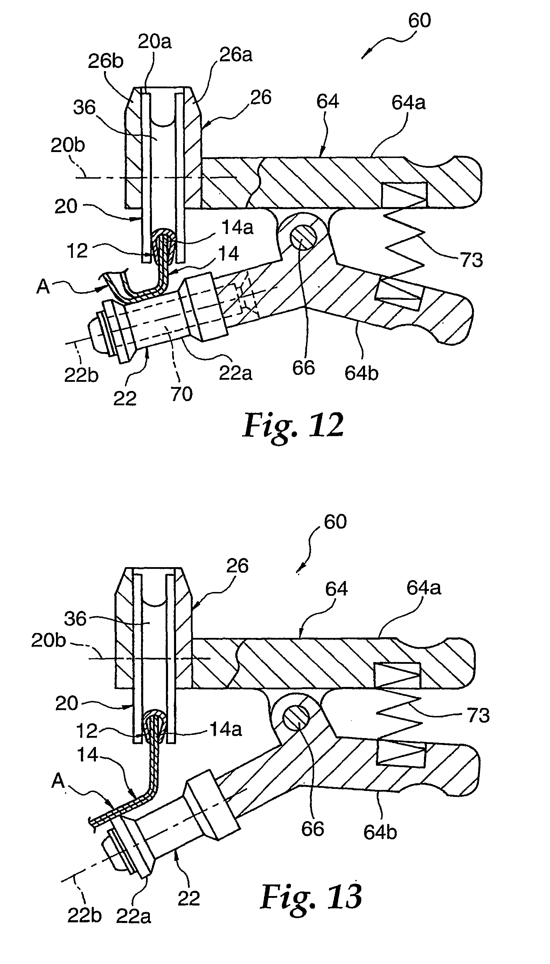

When the operator sequentially moves the body 18 thereafter, the gutter-sectional strip 12 is continuously withdrawn through the passage 16 and gradually and automatically attached to the edge 14a of the plate-like portion 14 (Fig. 12). During this gradual attachment stage, the object A having the plate-like portion 14 is sequentially nipped between the fitting roller 20 and the support roller 22 in a stable state. On the other hand, since the gutter-sectional strip 12, especially the back length 12b, is applied with a proper pressure due to the elastic bias of the biasing member 72 (compressive coil springs 73) from the pressing groove 36 of the rotating fitting roller 20, the gutter-sectional strip 12 is attached to the edge 14a of the plate-like portion 14 in a state wherein the edge 14a of the plate-like portion 14 is deeply and securely inserted into the recess 12c between the arm pieces 12a.

It will be understood that the same operation and effect are achievable by the attaching device 60 of the above structure as those of the attaching device 10 described before. Further, according to the attaching device 60, it is possible to similarly attach the gutter-sectional strip 12 to the object A having the plate-like portion 14 of a different shape (for example, the bending angle reaching the edge 14a) by the above-mentioned strip attaching operation, by operating the movable handle 64b under the elastic bias of the biasing member 72 (compressive coil springs 73) to properly change the relative angular positional relationship between the rotary axis 20b of the fitting roller 20 and the rotary axis 22b of the support roller 22 (Fig. 13). Particularly, even if the bending angle of the edge 14a of the plate-like portion 14 of the object A is variously changed during the above-mentioned gradual attachment stage, the support roller 22 is passively displaced together with the movable handle 64b to properly change the relative angular positional relationship between the rotary axis 22b thereof and the rotary axis 20b of the fitting roller 20 without the intentional operation of the operator. Moreover, since the object A having the plate-like portion 14 is sequentially nipped all the while between the fitting roller 20 and the support roller 22 under the bias of the biasing member 72, it is possible to move the body 18 while conforming the fitting roller 20 with the edge 14a in a stable state without any skill of the operator, and thus to accurately and promptly attach the gutter-sectional strip 12 to the edge 14a of the plate-like portion 14.

While the present invention has been described based on the preferred embodiments of the present invention, the present invention may be changed or modified within a scope of claim for patent.

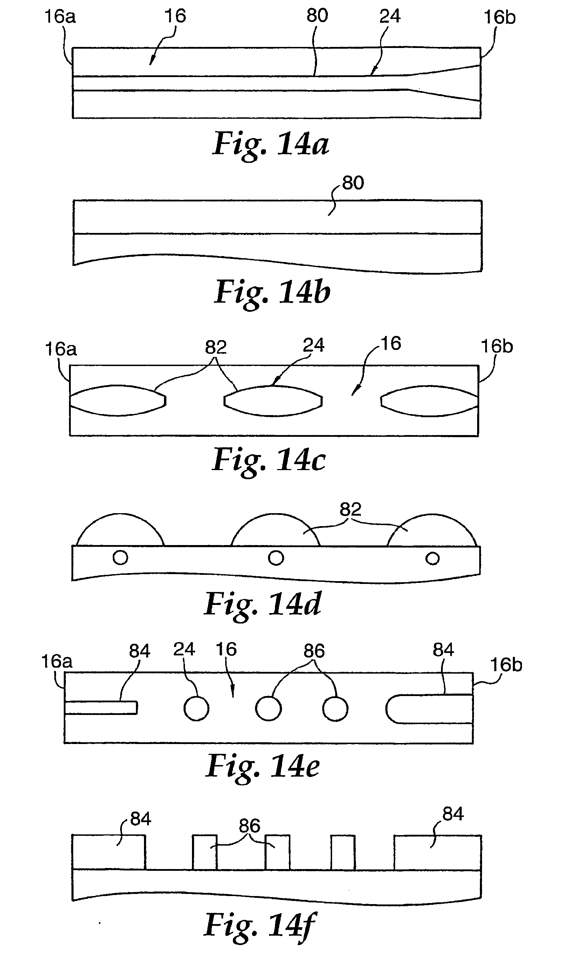

For example, the strip guide 24 provided in the passage 16 of the body 18 in the attaching device 10 is not limited to the illustrated rib 25 having a plain profile but may have various structures. As one example thereof, a strip guide 24 shown in Figs. 14(a) and 14(b) is a deformed rib 80 having a width smaller at the inlet 16a which is gradually widened in the vicinity of the outlet 16b. According to such a structure, a strip-advancing resistance generated when the strip guide 24 pushingly widens the arm pieces 12a of the gutter-sectional strip 12 to advance the gutter-sectional strip 12 through the passage 16 is effectively reduced. In this regard, as strip guides 24 having the similar effect for reducing the strip-advancing resistance may be that consisting of a plurality of rotating rollers 82 shown in Figs. 14(c) and 14(d), or the combination of ribs 84 and pins 86 as shown in Figs. 14(e) and 14(f).

The relative positional relationship between the fitting roller 20 and the support roller 22 in the attaching device 10 (the relationship of the initial position in the attaching device 60) may be properly selected in accordance with shapes of the plate-like portion 14 to which the strip is attached. Further, the suitable number of two or more may be selected for the fitting roller 20, the support roller 22 or the guide roller 50.

In addition, instead of being rotatable, any one or more or all of the fitting roller(s) 20, support roller(s) 22 and guide roller(s) 50 may be stationary (i.e., non-rotatable) and have a relatively low coefficient of friction surface. Furthermore, instead of being a stationary roller or having an annularly curved or circumferential outer surface, as with a roller, the pressing groove 36 may be stationary (i.e., non-rotatable) and have a relatively straight, or flat, surface that has a relatively low coefficient of friction that can slide along the gutter-section strip. Instead of being part of a stationary roller or being an annularly curved or circumferential outer surface, as with a roller, the support surface 22a may also be stationary (i.e., non-rotatable), relatively straight or flat, and have a relatively low coefficient of friction that can slide along the object. Similarly, instead of being part of a stationary roller or having an annularly curved or circumferential outer surface, as with a roller, the engaging portion 48 may also be stationary (i.e., non-rotatable) and have a relatively straight, or flat, surface that has a relatively low coefficient of friction that can slide along the object.

The inventive attaching device is effectively utilized in the strip attaching operation for attaching a gutter-sectional strip having functions of protection, ornamentation, maintenance and/or seal onto an exposed edge of a plate-like portion of an object such as a building, a vehicle, a general machine, a furniture or a stationery.

## Claims

1. An attaching device (10) for gradually attaching a gutter-sectional strip (12), having an optional length to an edge (14a) of a plate-like portion (14) of an object, the gutter-sectional strip (12) including a pair of arm pieces (12a) opposing each other and a back length (12b) connecting the arm pieces (12a) with each other, said device comprising:
a) a body (18) having a passage (16) for the gutter-sectional strip (12);
b) a pressing groove (36) provided in said body (18) for receiving the gutter-sectional strip (12) with the back length (12b) thereof being firstly received;
said device **characterised in that** it further comprises:
c) a support surface (22) provided in said body (18) and substantially opposing and cooperating with said pressing groove (36) to hold therebetween the object having the plate-like portion (14); and
d) a strip guide (24) provided in said passage (16) for guiding the gutter-sectional strip (12) toward said pressing groove (36) while spreading out the arm pieces (12a) of the gutter-sectional strip (12) as the gutter-sectional strip (12) is fed along said passage (16).

2. The attaching device as defined in claim 1, wherein at least one of said pressing groove and said support surface is structured so as to rotate as the object and the gutter-sectional strip pass by therebetween.

3. The attaching device as defined in claim 1, wherein at least one of said pressing groove and said support surface are structured so as not to rotate as the object and the gutter-sectional strip pass by therebetween.

4. The attaching device as defined in claim 1, wherein said pressing groove and said support surface are both structured so as to rotate as the object and the gutter-sectional strip pass by therebetween.

5. The attaching device as defined in claim 1, wherein said device further comprises at least one fitting roller provided in said body to be rotatable about an axis extending substantially perpendicular to a feeding direction of the gutter-sectional strip along said passage, with said pressing groove being defined by a portion of said at least one fitting roller.

6. The attaching device as defined in claim 5, wherein said pressing groove extends annularly along an outer circumferential surface of said at least one fitting roller.

7. The attaching device as defined in claim 5 or 6, wherein said strip guide is structured to guide the gutter-sectional strip toward said at least one fitting roller while spreading out the arm pieces of the gutter-sectional strip as the gutter-sectional strip is fed along said passage.

8. The attaching device as defined in any one of claims 5 to 7, wherein said device further comprises at least one support roller provided so as to be rotatable in said body, with at least part or all of said support surface being defined by an outer circumferential surface of said at least one support roller.

9. The attaching device as defined in claim 8, wherein said outer circumferential surface of said at least one support roller substantially opposes and cooperates with said pressing groove to hold therebetween the object having the plate-like portion.

10. The attaching device as defined in claim 5, wherein said pressing groove extends annularly along an outer circumferential surface of said at least one fitting roller, said device further comprises at least one support roller provided so as to be rotatable in said body, with at least part or all of said support surface being defined by an outer circumferential surface of said at least one support roller, and said outer circumferential surface of said at least one support roller substantially opposes said outer circumferential surface of said at least one fitting roller and cooperates with said at least one fitting roller to hold therebetween the object having the plate-like portion.

11. The attaching device as defined in any one of claims 1 to 3, wherein said pressing groove is stationary and has a relatively low coefficient of friction surface to slide along the gutter-section strip.

12. The attaching device as defined in any one of claims 1 to 3 and 5 to 7, wherein said support surface is stationary and has a relatively low coefficient of friction to slide along the object.

13. The attaching device as defined in any one of claims 5 to 10, wherein said fitting roller further includes a centering channel formed in said pressing groove, for receiving the edge of the plate-like portion of the object.

14. The attaching device as defined in any one of claims 8 to 10, further comprising an edge guide provided in said body and disposed upstream of said fitting roller and said support roller as seen in a direction of relative motion of the plate-like portion during a strip attaching operation, the edge guide including an engaging portion engageable with the edge of the plate-like portion for guiding said body along the edge of the plate-like portion during the strip attaching operation.

15. The attaching device as defined in claim 14, wherein said edge guide includes a guide roller provided to be rotatable in said body.

16. The attaching device as defined in any one of claims 1 to 15, wherein said pressing groove and said support surface are movable toward and away from each other.

17. The attaching device as defined in any one of claims 8 to 10, 14 and 15, wherein said fitting roller and said support roller are movable toward and away from each other.

18. The attaching device as defined in any one of claims 1 to 17, further comprising a biasing member for elastically biasing said pressing groove and said support surface toward each other.

19. The attaching device as defined in any one of claims 8 to 10, 14, 15 and 17, further comprising a biasing member for elastically biasing said fitting roller and said support roller toward each other.

20. The attaching device as defined in any one of claims 1 to 19, wherein said pressing groove and said support surface are relatively pivotable to change their relative angular positional relationship.

21. The attaching device as defined in any one of claims 8 to 10, 14, 15, 17 and 19, wherein said fitting roller and said support roller are relatively pivotable to change a relative angular positional relationship between respective rotary axes.

## Patentansprüche

1. Befestigungsvorrichtung (10) zum allmählichen Befestigen einer Rinnen-Profilleiste (12), die eine optionale Länge aufweist, an einer Kante (14a) eines plattenartigen Abschnitts (14) eines Gegenstands, wobei die Rinnen-Profilleiste (12) ein Paar von Armstücken (12a), die einander gegenüberliegen, und eine hintere Länge (12b), die die Armstücke (12a) miteinander verbindet, aufweist, wobei die Vorrichtung Folgendes aufweist:
(a) einen Körper (18), der einen Durchgang (16) für die Rinnen-Profilleiste (12) aufweist;
(b) eine Pressrille (36), die im Körper (18) bereitgestellt ist, um die Rinnen-Profilleiste (12) aufzunehmen, wobei die hintere Länge (12b) davon als erstes aufgenommen wird;
wobei die Vorrichtung **dadurch gekennzeichnet ist, dass** sie ferner Folgendes aufweist:
(c) eine Stützfläche (22), die im Körper (18) bereitgestellt ist und der Pressrille (36) im Wesentlichen gegenüberliegt und damit zusammenwirkt, um dazwischen den Gegenstand, der den plattenartigen Abschnitt (14) aufweist, zu halten; und
(d) eine Leistenführung (24), die im Durchgang (16) bereitgestellt ist, um die Rinnen-Profilleiste (12) zur Pressrille (36) zu führen, während die Armstücke (12a) der Rinnen-Profilleiste (12) auseinandergespreizt werden, während die Rinnen-Profilleiste (12) den Durchgang (16) entlang vorgeschoben wird.

2. Befestigungsvorrichtung nach Anspruch 1, wobei mindestens eines aus der Pressrille und der Stützfläche so strukturiert ist, dass es sich dreht, während der Gegenstand und die Rinnen-Profilleiste dazwischen vorbeilaufen.

3. Befestigungsvorrichtung nach Anspruch 1, wobei mindestens eines aus der Pressrille und der Stützfläche so strukturiert ist, dass es sich nicht dreht, während der Gegenstand und die Rinnen-Profilleiste dazwischen vorbeilaufen.

4. Befestigungsvorrichtung nach Anspruch 1, wobei die Pressrille und die Stützfläche beide so strukturiert sind, dass sie sich drehen, während der Gegenstand und die Rinnen-Profilleiste dazwischen vorbeilaufen.

5. Befestigungsvorrichtung nach Anspruch 1, wobei die Vorrichtung ferner mindestens eine Anbringungswalze aufweist, die derart im Körper bereitgestellt ist, dass sie um eine Achse drehbar ist, welche sich im Wesentlichen senkrecht zu einer Vorschubrichtung der Rinnen-Profilleiste entlang des Durchgangs erstreckt, wobei die Pressrille durch einen Abschnitt der mindestens einen Anbringungswalze definiert ist.

6. Befestigungsvorrichtung nach Anspruch 5, wobei sich die Pressrille ringförmig entlang einer äußeren Umfangsfläche der mindestens einen Anbringungsrille erstreckt.

7. Befestigungsvorrichtung nach Anspruch 5 oder 6,
wobei die Leistenführung derart strukturiert ist, dass die Rinnen-Profilleiste zur mindestens einen Anbringungswalze geführt wird, während die Armstücke der Rinnen-Profilleiste auseinandergespreizt werden, während die Rinnen-Profilleiste den Durchgang entlang vorgeschoben wird.

8. Befestigungsvorrichtung nach einem der Ansprüche 5 bis 7, wobei die Vorrichtung ferner mindestens eine Stützwalze aufweist, die derart bereitgestellt ist, dass sie im Körper drehbar ist, wobei mindestens ein Teil der oder die gesamte Stützfläche durch eine äußere Umfangsfläche der mindestens einen Stützwalze definiert ist.

9. Befestigungsvorrichtung nach Anspruch 8, wobei die äußere Umfangsfläche der mindestens einen Stützwalze der Pressrille im Wesentlichen gegenüberliegt und damit zusammenwirkt, um dazwischen den Gegenstand, der den plattenartigen Abschnitt aufweist, zu halten.

10. Befestigungsvorrichtung nach Anspruch 5, wobei sich die Pressrille ringförmig entlang einer äußeren Umfangsfläche der mindestens einen Anbringungswalze erstreckt, wobei die Vorrichtung ferner mindestens eine Stützwalze aufweist, die derart bereitgestellt ist, dass sie im Körper drehbar ist, wobei mindestens ein Teil der oder die gesamte Stützfläche durch eine äußere Umfangsfläche der mindestens einen Stützwalze definiert ist, und
wobei die äußere Umfangsfläche der mindestens einen Stützwalze der äußeren Umfangsfläche der mindestens einen Anbringungswalze im Wesentlichen gegenüberliegt und mit der mindestens einen Anbringungswalze zusammenwirkt, um dazwischen den Gegenstand, der den plattenartigen Abschnitt aufweist, zu halten.

11. Befestigungsvorrichtung nach einem der Ansprüche 1 bis 3, wobei die Pressrille stationär ist und eine Fläche mit einem verhältnismäßig niedrigen Reibungskoeffizienten aufweist, um die Rinnen-Profilleiste entlang zu gleiten.

12. Befestigungsvorrichtung nach einem der Ansprüche 1 bis 3 und 5 bis 7, wobei die Stützfläche stationär ist und einen verhältnismäßig niedrigen Reibungskoeffizienten aufweist, um den Gegenstand entlang zu gleiten.

13. Befestigungsvorrichtung nach einem der Ansprüche 5 bis 10, wobei die Anbringungswalze ferner einen Zentrierungskanal aufweist, der in der Pressrille gebildet ist, um die Kante des plattenartigen Abschnitts des Gegenstands aufzunehmen.

14. Befestigungsvorrichtung nach einem der Ansprüche 8 bis 10, ferner aufweisend eine Kantenführung, die im Körper bereitgestellt ist und in einer Richtung der relativen Bewegung des plattenartigen Abschnitts während einer Leistenbefestigungstätigkeit gesehen stromaufwärts der Anbringungswalze und der Stützwalze angeordnet ist, wobei die Kantenführung einen Eingreifabschnitt aufweist, der mit der Kante des plattenartigen Abschnitts eingreifen kann, um den Körper während der Leistenbefestigungstätigkeit entlang der Kante des plattenartigen Abschnitts zu führen.

15. Befestigungsvorrichtung nach Anspruch 14, wobei die Kantenführung eine Führungsrolle aufweist, die derart bereitgestellt ist, dass sie im Körper drehbar ist.

16. Befestigungsvorrichtung nach einem der Ansprüche 1 bis 15, wobei die Pressrille und die Stützfläche zueinander hin und voneinander weg beweglich sind.

17. Befestigungsvorrichtung nach einem der Ansprüche 8 bis 10, 14 und 15, wobei die Anbringungswalze und die Stützwalze zueinander hin und voneinander weg beweglich sind.

18. Befestigungsvorrichtung nach einem der Ansprüche 1 bis 17, ferner aufweisend ein Vorspannelement, um die Pressrille und die Stützfläche elastisch zueinander hin vorzuspannen.

19. Befestigungsvorrichtung nach einem der Ansprüche 8 bis 10, 14, 15 und 17, ferner aufweisend ein Vorspannelement, um die Anbringungswalze und die Stützwalze elastisch zueinander hin vorzuspannen.

20. Befestigungsvorrichtung nach einem der Ansprüche 1 bis 19, wobei die Pressrille und die Stützfläche relativ schwenkbar sind, um ihre relative Winkelpositionsbeziehung zu verändern.

21. Befestigungsvorrichtung nach einem der Ansprüche 8 bis 10, 14, 15, 17 und 19, wobei die Anbringungswalze und die Stützwalze relativ schwenkbar sind, um eine relative Winkelpositionsbeziehung zwischen jeweiligen Drehachsen zu verändern.

## Revendications

1. Dispositif de fixation (10) pour fixer progressivement une bande en U (12) présentant une longueur optionnelle jusqu'à un bord (14a) d'une partie en forme de plaque (14) d'un objet, la bande en U (12) comprenant une paire de pièces de bras (12a) mutuellement opposées et une longueur arrière (12b) reliant les pièces de bras (12a) l'une à l'autre, ledit dispositif comprenant:
a) un corps (18) comprenant un passage (16) pour la bande en U (12);
b) une rainure de pression (36) formée dans ledit corps (18) et destinée à recevoir la bande en U (12), où la longueur arrière (12b) de celle-ci est reçue en premier lieu;
ledit dispositif étant **caractérisé en qu'**il comprend en outre:
c) une surface de support (22) prévue dans ledit corps (18) et sensiblement opposée à et coopérant avec ladite rainure de pression (36) pour maintenir entre elles l'objet présentant la partie en forme de plaque (14); et
d) un guide de bande (24) prévu dans ledit passage (16) pour guider la bande en U (12) en direction de ladite rainure de pression (36) tout en écartant les pièces de bras (12a) de la bande en U (12) lorsque la bande en U (12) est amenée le long dudit passage (16).

2. Dispositif de fixation selon la revendication 1, dans lequel au moins soit ladite rainure de pression soit ladite surface de support est structurée de manière à tourner lorsque l'objet et la bande en U passent entre elles.

3. Dispositif de fixation selon la revendication 1, dans lequel au moins soit ladite rainure de pression soit ladite surface de support est structurée de manière à ne pas tourner lorsque l'objet et la bande en U passent entre elles.

4. Dispositif de fixation selon la revendication 1, dans lequel ladite rainure de pression et ladite surface de support sont toutes les deux structurées de manière à tourner lorsque l'objet et la bande en U passent entre elles.

5. Dispositif de fixation selon la revendication 1, ledit dispositif comprenant en outre au moins un rouleau d'agencement prévu dans ledit corps de manière à pouvoir tourner autour d'un axe s'étendant essentiellement perpendiculairement à une direction d'alimentation de la bande en U le long dudit passage, où ladite nervure de pression est définie par une partie dudit au moins un rouleau d'agencement.

6. Dispositif de fixation selon la revendication 5, dans lequel ladite rainure de pression s'étend annulairement le long d'une surface circonférentielle extérieure dudit au moins un rouleau d'agencement.

7. Dispositif de fixation selon la revendication 5 ou 6, dans lequel ledit guide de bande est structuré pour guider la bande en U vers ledit au moins un rouleau d'agencement tout en écartant les pièces de bras de la bande en U lorsque la bande en U est amenée le long dudit passage.

8. Dispositif de fixation selon l'une quelconque des revendications 5 à 7, ledit dispositif comprenant en outre au moins un rouleau de support prévu de manière à pouvoir tourner dans ledit corps, où au moins une partie voire la totalité de ladite surface de support est définie par une surface circonférentielle extérieure dudit au moins un rouleau de support.

9. Dispositif de fixation selon la revendication 8, dans lequel ladite surface circonférentielle extérieure dudit au moins un rouleau de support s'oppose sensiblement à et coopère avec ladite rainure de pression pour maintenir entre elles l'objet présentant la partie en forme de plaque.

10. Dispositif de fixation selon la revendication 5, dans lequel ladite rainure de pression s'étend annulairement le long d'une surface circonférentielle extérieure dudit au moins un rouleau d'agencement, ledit dispositif comprenant en outre au moins un rouleau de support prévu de manière à pouvoir tourner dans ledit corps, où au moins une partie voire la totalité de ladite surface de support est définie par une surface circonférentielle extérieure dudit au moins un rouleau de support, et où ladite surface circonférentielle extérieure dudit au moins un rouleau de support s'oppose sensiblement à ladite surface circonférentielle extérieure dudit au moins un rouleau d'agencement et coopère avec ledit au moins un rouleau d'agencement pour maintenir entre eux l'objet présentant la partie en forme de plaque.

11. Dispositif de fixation selon l'une quelconque des revendications 1 à 3, dans lequel ladite rainure de pression est stationnaire et présente une surface à coefficient de friction relativement faible afin de glisser le long de la bande en U.

12. Dispositif de fixation selon l'une quelconque des revendications 1 à 3 et 5 à 7, dans lequel ladite surface de support est stationnaire et présente un coefficient de friction relativement faible afin de glisser le long de l'objet.

13. Dispositif de fixation selon l'une quelconque des revendications 5 à 10, dans lequel ledit rouleau d'agencement comprend en outre un canal de centrage formé dans ladite rainure de pression et destiné à recevoir le bord de la partie en forme de plaque de l'objet.

14. Dispositif de fixation selon l'une quelconque des revendications 8 à 10, comprenant en outre un guide de bord formé dans ledit corps et disposé en amont dudit rouleau d'agencement et dudit rouleau de support lorsqu'on regarde dans une direction de déplacement relatif de la partie en forme de plaque pendant une opération de fixation de la bande, le guide de bord comprenant une partie d'engagement pouvant être engagée avec le bord de la partie en forme de plaque pour guider ledit corps le long du bord de la partie en forme de plaque pendant l'opération de fixation de la bande.

15. Dispositif de fixation selon la revendication 14, dans lequel ledit guide de bord comprend un rouleau de guidage prévu de manière à pouvoir tourner dans ledit corps.

16. Dispositif de fixation selon l'une quelconque des revendications 1 à 15, dans lequel ladite rainure de pression et ladite surface de support sont mobiles pour se rapprocher et s'écarter l'une de l'autre.

17. Dispositif de fixation selon l'une quelconque des revendications 8 à 10, 14 et 15, dans lequel ledit rouleau d'agencement et ledit rouleau de support sont mobiles pour se rapprocher et s'écarter l'un de l'autre.

18. Dispositif de fixation selon l'une quelconque des revendications 1 à 17, comprenant en outre un élément de poussée pour pousser élastiquement ladite rainure de pression et ladite surface de support l'une vers l'autre.

19. Dispositif de fixation selon l'une quelconque des revendications 8 à 10, 14, 15 et 17, comprenant en outre un élément de poussée pour pousser élastiquement ledit rouleau d'agencement et ledit rouleau de support l'un vers l'autre.

20. Dispositif de fixation selon l'une quelconque des revendications 1 à 19, dans lequel ladite rainure de pression et ladite surface de support peuvent pivoter de façon relative pour modifier leur relation de position angulaire relative.

21. Dispositif de fixation selon l'une quelconque des revendications 8 à 10, 14, 15, 17 et 19, dans lequel ledit rouleau d'agencement et ledit rouleau de support peuvent pivoter de façon relative pour modifier une relation de position angulaire relative entre des axes de rotation respectifs.
